# EUROPEAN PATENT SPECIFICATION

(11) **EP 2 010 704 B1**
(45) Date of publication and mention of the grant of the patent: **25.12.2013**
(21) Application number: 07776435.5
(22) Date of filing: 27.04.2007
(51) Int. Cl.: B32B 5/26, D04H 3/02, D04H 3/14, D04H 13/00, D04H 1/54, D04H 1/74

(54) **ANISOTROPIC EXTENSIBLE NONWOVENS**
DEHNBARE ANISOTROPISCHE VLIESSTOFFE
NON TISSES EXTENSIBLES ANISOTROPES

(30) Priority: 27.04.2006 US 795525 P
(43) Date of publication of application: 07.01.2009
(73) Proprietor: Invista Technologies S.à.r.l., 9000 St. Gallen (CH)
(72) Inventor: MARTIN, Kenneth E., Newark, Delaware 19711 (US)
(74) Representative: Cockerton, Bruce Roger
(86) International application number: PCT/US2007/010360
(87) International publication number: WO 2007/127442

(56) References cited:
- EP-A- 1 520 569
- EP-A- 1 538 250
- WO-A-2005/040477
- GB-A- 1 499 899
- US-A- 3 812 553
- US-A- 3 969 561
- US-A- 4 999 232
- US-A1- 2005 095 943
- US-B1- 6 537 644

## Description

### FIELD OF THE INVENTION

This invention relates to nonwoven fabrics in which the fibers of the fabric are laid down with an orientation primarily in a machine direction. The resulting nonwoven has high tensile strength and very low elongation in the machine direction, but relatively low tensile strength and can be elongated with relatively little force in the cross direction. In a process for making this nonwoven, the required fiber orientation property is obtained without a separate step of "consolidation" or "necking."

### BACKGROUND OF THE INVENTION

Stretch nonwovens are enjoying rapid growth in the hygiene industry. The majority of products in use either have a machine direction stretch capability, such as the Kimberly Clark Demique® and "Flex-All" products or cross direction stretch such as the "Golden Phoenix" or "Tredegar" nonwoven - elastic film laminates. However, a true multi-direction stretch nonwoven provides valuable functionality to hygiene related products as well as opening new end uses such as apparel to stretch nonwovens.

Commercial producers have made fully elastic multi-directional spunbond nonwovens by using elastomeric thermoplastic polymers in conventional spunbond processes. However these products, while exhibiting excellent elasticity also have an objectionable rubber like hand that is characteristic of elastic polymers. It is known to produce nonwovens with fibers oriented primarily in the machine direction by a post production "necking" or "consolidation" step in which the nonwoven is drawn in the machine direction in a separate step after it is initially produced. United States patents assigned to the University of Tennessee and related to and disclosing, in part, this technology include:
U.S. Patent Number 5,441,550 (Issued August 15,1995);
U.S. Patent Number 5,443,606 (Issued August 25, 1995);
U.S. Patent Number 5,486,411 (Issued January 23, 1996);
U.S. Reissue Patent Number 35,206 (Issued April 16, 1996; Reissue of U.S. 5,244,482);
U.S. Patent Number 5,599,366 (Issued February 4, 1997);
U.S. Patent Number 5,730,923 (Issued March 24, 1998);
U.S. Patent Number 5,747,394 (Issued May 5, 1998);
U.S. Patent Number 6,030,906 (Issued February 29, 2000).

In view of the disclosures of the prior art it remains clear that the necking or consolidation processes provide a nonwoven product with at least the desirable cross direction extensibility. This cross direction extensibility is obtained after a second step following production of a nonwoven. The added costs of this step to the overall process are a deficiency to an economically viable route to the product.

### SUMMARY OF THE INVENTION

Herein disclosed is an invention providing a cross directionally extensible nonwoven produced directly without a consolidation or necking step.

The nonwoven provided by the process herein disclosed has substantially different physical properties in the machine direction versus the cross direction characterized in that said nonwoven has a cross direction elongation at break of at least about 50 percent. Substantially different physical properties refer to at least the elongation without rupture in the machine direction and the perpendicular direction..

The nonwoven provided herein has a cross direction elongation at break of 100 to 200 percent.

The nonwoven provided in embodiments herein is selected from the group comprising spunbonded, melt blown, carded thermal bond, and spunlaced structures.

Provided by the disclosures herein is a process for making a nonwoven having substantially different physical properties in the machine direction versus the cross direction comprising the steps of: laying down a fibrous web, followed by bonding the web. The process provided substantially aligns the fibers of the nonwoven in the machine direction and bonds the resulting web such that the resulting material has cross direction extensibility but with sufficient cross directional and machine directional coherence to allow subsequent conversion steps.

Provided in an aspect of the invention is a process for making an extensible nonwoven comprising the steps of laying down a fibrous web and bonding the web by selecting a bonding pattern comprising a small number of bonding points and wherein, the bond points arranged along an axis perpendicular to the machine direction are spaced more widely apart than the bond points arranged along an axis parallel to the machine direction and wherein the bond points are provided by thermal energy.

Provided in an aspect of the invention is a process for making an extensible nonwoven comprising the steps of aligning carded bats of fibers such that a majority of the fibers have a fiber direction making an angle substantially parallel to the machine direction and bonding the web.

### DEFINITIONS

The following non-limiting definitions comprise a glossary of stretch nonwoven technology terms. These definitions are meant to guide the skilled person to a clear and concise meaning for the various terms of art as used herein.

LYCRA® XA, a registered trademark of INVISTA S. à r. l., 3 Little Falls Centre, 2801 Centreville Road, Wilmington, Delaware, 19808. LYCRA® fibers specifically designed to be adhesively attached rather than knitted or woven into place and used diapers and adult incontinence products. "XA" stands for "Extra Adherent" or "Extra Adhesive".

Decitex and denier relative thickness of a yam, a linear density. Decitex is weight in grams of 10,000 meters of yam. Denier is weight in grams of 9,000 meters of yam.

Machine Direction Axis of a nonwoven fabric is that direction parallel to the direction in which the fabric is forwarded through the machine; the direction in which the fabric is made.

Cross Direction Axis of a nonwoven fabric is that direction perpendicular to the direction in which the fabric is made.

Consolidated Nonwoven is one that can be extended (stretched) in the cross direction (also known as a "necked" direction) with a relatively low force. Normally, consolidated nonwovens have a low retraction power and high permanent set (deformation) after extension. Consolidated nonwovens are produced from almost any normal "as made" nonwoven by a drafting process (e.g. "the Kimberly Clark" technology) or drafting plus heat (the University of Tennessee *TANDEC*) process. Consolidated nonwovens normally have high modulus and tensile strength in the machine direction, e.g. elongation without rupture to 200 or 250% is possible.

Extensible Nonwoven is one that can be extended in the cross direction with relatively low force. Such nonwovens can be either a consolidated nonwoven or an "as made" extensible nonwoven. "As-made" extensible nonwovens have characteristics similar to consolidated nonwovens but generally having lower elongation but not as a result of a special necking or consolidation process.

Anisotropic Nonwoven are ones having different properties (e.g. elongation and tensile strength) in the machine direction versus the cross machine direction. Anisotropic nonwovens are "as-made" extensible nonwovens.

GSM "grams per square meter" The common measure of the weight or thickness of a nonwoven per unit area. Normally, these range from 10 GSM at the low end of spunbond and melt blown nonwovens up to 100 - 400 GSM for needle punch nonwovens. For example, "diaper cover stock" nonwovens are in the range of 15 to 25 GSM.

MDXA "Machine Direction XA" A laminate of LYCRA® spandex fibers and a nonwoven or a film (e.g. nonwoven/LYCRA®/nonwoven). LYCRA® under extension is adhesively bonded to the nonwoven using a hot melt adhesive. The laminate forms a characteristic puckered pattern when allowed to retract. The MDXA family of product properties differ significantly depending on LYCRA® spacing, decitex and type of nonwoven or film.

CDXA (also known as CDXA-I) "Cross Direction XA" A laminate of LYCRA® spandex fibers between layers of nonwoven in which the LYCRA® fibers are laid down in a "zig zag" pattern. The LYCRA® fibers are extended when glued in place and product has a characteristic puckered appearance when allowed to relax. The CDXA product is normally a narrow tape that is rigid in the machine direction but elastic (stretches and recovers) in the cross direction. Intended for cross direction stretchable components in diapers and adult incontinence products, such as waistbands, side panels, elastic diaper ears and closure tapes.

CDXA-III (so-catted "version 3" and a successor to CDXA) This product is a laminate having a single layer of an extensible nonwoven that is impregnated with a hard segment and soft segment polyurethane polymer; essentially the same polymer used to make LYCRA® spandex filaments.. This impregnated laminate of high retractive power is an extensible nonwoven produced by a coagulation coating process. The impregnated laminate is characteristically rigid in the machine direction and elastic in the cross direction.

EDXA "Every Direction XA" A nonwoven with multiple direction (both machine and cross direction) stretch and recovery. Examples are spun bonded nonwovens made using thermoplastic elastomeric polymers by ADC (Advanced Design Concepts GmbH), Germany.

Nonwoven Production Technologies: Nonwoven production can be divided into three parts: "Web Formation, Bonding, and Finishing"
Web formation can be divided into "Spun Melt" processes that begin with thermoplastic polymer chips, "Flash Spun" nonwovens are a solvent spun version of "Spun Melt" nonwovens, and "Carded or Air Laid" nonwovens begin with staple fibers. "Spun Melt" is further divided into "Spun Bond" and "Melt Blown" nonwovens. Fibers in spun bond nonwovens are melt spun into an air extension chamber where the fibers are drawn to increase strength by an "air attenuation" process and then laid down on a moving belt. In a melt blown process, the polymer melt is extruded into a high shear zone powered by air which breaks the fibers into small sections and draws them while in the molten state into very fine deniers. Spun bond is the most common nonwoven process, producing a strong, durable nonwoven fabric in wide use in the hygiene industry (e.g. diapers). Melt blown fabrics are normally weak but with very fine and uniform pore size and are commonly used in filtration.

Spun bond, melt blown and flash spun nonwovens are normally consolidated by a thermal bonding process. Hybrid nonwovens, for example SMS, or SMMS (spun bond/melt blown/spun bond) are becoming increasingly common. In flash spun nonwovens, a polymer (commonly polyethylene and polypropylene or mixtures) is dissolved under pressure in a low boiling solvent which vaporizes immediately upon pressure let down and extrusion of the polymer solution from a spinneret. The most important flash spun nonwoven is TYVEK® from E. I. Du Pont de Nemours and Co. Inc, Wilmington, Delaware.

Carded or Air Laid nonwovens begin with staple fibers which are formed into webs by either a conventional carding or by air laying in which individual fibers are conveyed into a web by an air stream. Carded and air laid nonwovens are bonded by processes employing thermal, chemical or by mechanically bonding means.

"Web bonding" is the process used to bind fibers of the nonwoven web together. There are generally three web bonding types: "Thermal Bonding" which partially melts fibers together, usually by a calender roll with a raised pattern that bonds the web together at specific points (dots) in the fabric. "Chemical (or Adhesive) Bonding" that bonds fibers together using a resin or adhesive. "Mechanical Bonding" is achieved using a large number of steel needles are repeatedly passed through the fabric to entangle the fibers, also known as needle punched. Similarly, high-pressure water jets are used to accomplish fiber entangling and often calles spunlaced or hydro-entangled nonwovens. SONTARA® from E. **I.** Du Pont de Nemours and Co. Inc, Wilmington, Delaware is an example of a spunlaced nonwoven. Spunlaced nonwovens are more three-dimensional and fabric like than other nonwovens and are generally viewed as the high quality end of the nonwoven spectrum.

"Web finishing" refers to a finish or treatment, usually a chemical compound, applied to a nonwoven to impart some characteristic, usually hydrophilicity.

### BRIEF DESCRIPTIONS OF THE DRAWINGS

Fig. 1A is a representation of a portion of a stretch nonwoven 10 having a plurality of bonding points 20.
Fig. 2A is flow diagram of one process for providing a stretch nonwoven according to the invention.

### DETAILED DESCRIPTION

According to this invention, a fully elastic nonwoven with a cloth like hand is provided by surrounding a primary spunbond elastomeric nonwoven (such as that based on EXXON VISTAMAXX® elastomeric polypropylene) by light weight layers of spun bond or melt blown hard fibers such as polypropylene, polyethylene, polyester, or polypropylene - polyethylene blends by spunbonded, meltblown and hybrid combination of the two processes. In this process, deposition of a layer of hard fiber on either side of the spunbond elastomer that is thin enough and lightly bonded enough to not hinder stretch and recovery of the center elastomeric layer. The elastic nonwoven is enhanced by using a high quality melt spun elastomer as the primary elastic layer.

According to an aspect of the invention provided are nonwoven fabrics in which the fibers of the fabric are intentionally laid down with an orientation primarily in a machine direction. The resulting nonwoven has high tensile strength and very low elongation in the machine direction, but relatively low tensile strength and can be elongated with relatively little force in the cross direction. In a process for making this nonwoven, the required fiber orientation property is obtained without a separate step "consolidation" or "necking."
Nonwovens with substantially different properties in the cross direction versus the machine direction means that the resulting nonwoven, hereinafter an "extensible nonwoven", is rigid with high break tenacity in the machine direction. At the same time the extensible nonwoven is easily extended in the cross direction without rupturing by application of a relatively low force. A relatively low force is an applied force of less than 1 Newton at 50% elongation.

Normally, care is taken in the production of nonwovens to randomize the direction of the fiber lay down to produce a sheet structure with similar physical properties (modulus, per cent elongation and break tenacity) in all directions. However, extensible nonwovens have been shown to be useful in producing a variety of materials that utilize nonwoven sheets with cross direction.

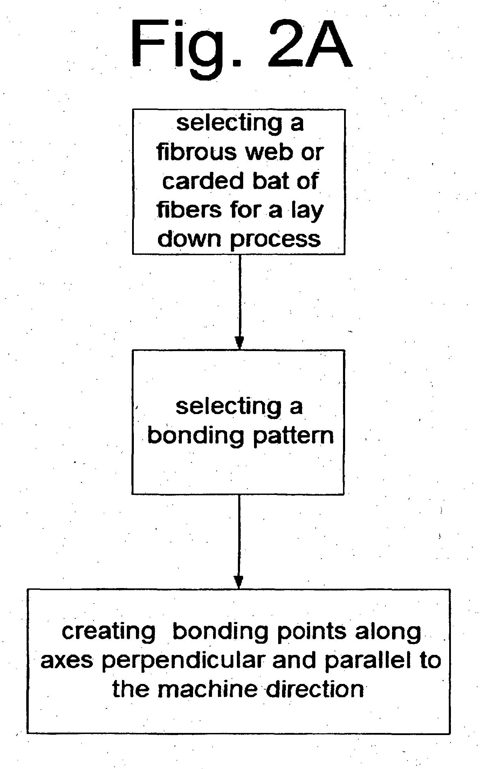

Extensible nonwovens with cross direction stretch of 200% are well known, but are produced by a post nonwoven formation conversion process. Patent disclosures relating to this technology are assigned to *TANDEC* (University of Tennessee Nonwovens Research Consortium), Kimberly Clark, and BBA. According to the disclosure of US Reissue Patent Number 35,206, processes commonly known as "necking" or "consolidation" start with a nonwoven, especially spun-bond and carded thermo-bond nonwovens, which is then drawn in the machine direction to substantially align the fibers of the nonwoven in the machine direction to produce the desired properties. In addition, spun-laced (hydro-entangled) nonwovens produced by a variety of producers, including E. I. DuPont, Sheng Hung, and BBA have properties that are similar to the desired "extensible" nonwoven due, but with elongation's generally less than 100%. In this invention, an extensible nonwoven is produced directly during the nonwoven formation process without the need for post formation processing and represented by the flow chart of Fig. 2A.

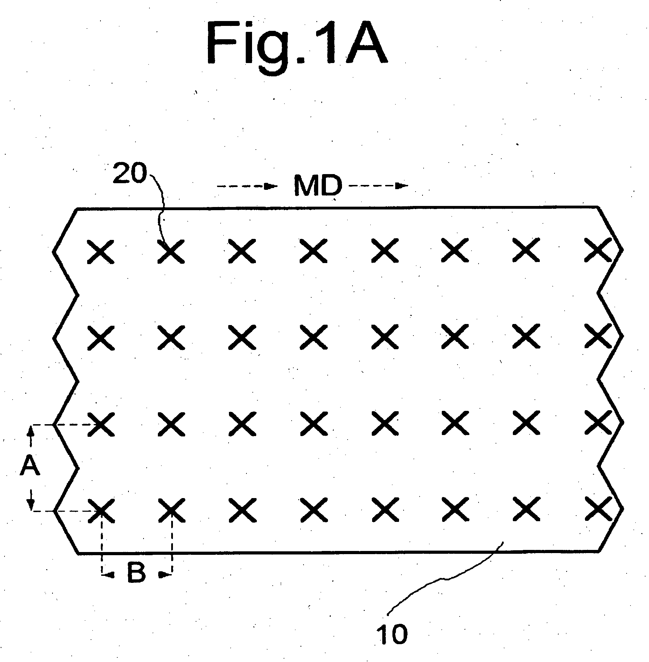

In the case of a nonwoven based on a fibrous web (in Fig. 1A), The extensible character of the nonwoven is enhanced by selecting a bonding pattern with a relative low number of bond points 20 (in Fig. 1A) and/or one in which the bond points are arranged such that bond points 20 along an axis perpendicular to the machine direction are widely spaced, e.g. having spacing A in Fig. 1A, while those on an axis parallel to the machine direction are relatively closely spaced, e.g. having a spacing B in Fig. 1A. The bonding point spacing satisfies the relationship A > 2(B). In the case of a spun-bond nonwoven, the bonding point pattern is accomplished by appropriate adjustment of the randomizing air jets at the fiber lay down point to produce the same fiber lay down as described above for carded thermo-bond nonwovens and also using the bonding patterns described above.

In the case of a nonwoven based on a carded web, aligning the carded bats forming the nonwoven in such a manner that the fiber direction is substantially parallel to the machine direction. The coherent character of the nonwoven so-formed is enhanced by bonding using known bonding means.

### TEST METHODS

Elongation at Break based on ASTM D 5035-90.

## Claims

1. An extensible nonwoven fabric in the form of a fibrous web, said nonwoven fabric having, as made and before being necked or consolidated, substantially different physical properties in the machine direction versus the cross direction, **characterized in that** said nonwoven fabric has:
a) a plurality of fibers laid down on a web-forming surface such that a majority of the fibers in the resulting web have a fiber direction making an angle substantially parallel to the machine direction of the web;
b) a plurality of bonding points within said web in a pattern such that the bonding points arranged along an axis perpendicular to the machine direction are spaced more than twice as far apart than are the bonding points arranged along an axis parallel to the machine direction; and
c) a cross direction elongation of 100 to 200 percent.

2. The extensible nonwoven fabric of claim 1 selected from the group comprising:
spunbonded, melt blown, carded thermally bonded, and spunlaced structures.

3. A process for making an extensible nonwoven fabric according to claim 1, said process comprising the steps of:
laying down a plurality of fibers to form a web on a web-forming surface in a manner such that a majority of the fibers in the resulting web have a fiber direction making an angle substantially parallel to the machine direction of the web; and
thereafter bounding the web in a bonding pattern comprising a plurality of bonding points, with the bonding points being arranged along an axis perpendicular to the machine direction being spaced more than twice as far apart than are the bond points arranged along an axis parallel to the machine direction, said bonding points being provided by thermal energy.

4. A process according to claim 3 wherein the plurality of fibers is provided by carded bats of fibers which are aligned such that a majority of the fibers laid down have a fiber direction making an angle substantially parallel to the machine direction of the web.

5. A process according to claim 4 wherein air jets are used to cause a majority of the fibers laid down to have a fiber direction making an angle substantially parallel to the machine direction of the web.

6. The extensible nonwoven fabric of claim 1 further comprising a layer of hard fibers.

7. The extensible nonwoven fabric of claim 6, wherein the hard fibers are spun bond or melt blown hard fibers.

8. The extensible nonwoven fabric of claim 7 wherein the hard fibers are selected from a group consisting of: polypropylene, polyethylene, polyester and polypropylene-polyethylene blends.

## Patentansprüche

1. Dehnbarer Vliesstoff in Form einer faserigen Bahn, wobei der Vliesstoff so, wie er hergestellt ist und bevor er zusammengezogen oder konsolidiert wird, wesentlich andere physikalische Eigenschaften in Maschinenrichtung im Vergleich mit der Querrichtung aufweist, **dadurch gekennzeichnet, dass** der Vliesstoff Folgendes aufweist:
a) ein Mehrzahl von Fasern, die auf eine bahnbildende Fläche abgelegt werden, derart, dass ein Hauptteil der Fasern in der so gebildeten Bahn eine Faserrichtung aufweist, die einen Winkel im Wesentlichen parallel zur Machinenrichtung der Bahn bildet;
b) eine Mehrzahl von Bondierstellen innerhalb der Bahn in einem Muster, derart, dass die Bondierstellen, die einer Achse entlang senkrecht zur Maschinenrichtung angeordnet sind, mehr als zweimal so weit voneinander beabstandet sind als die Bondierstellen, die einer Achse entlang parallel zur Maschinenrichtung angeordnet sind; und
c) eine Querrichtungsdehnung von 100 bis 200 Prozent.

2. Dehnbarer Vliesstoff nach Anspruch 1 ausgewählt aus der Gruppe umfassend:
spinngebundene, schmelzgeblasene, kardierte wärmegebundene und Spunlaced-Gebilde.

3. Verfahren zum Herstellen eines dehnbaren Vliesstoffs nach Anspruch 1, wobei das Verfahren die Schritte umfasst des:
Ablegens einer Mehrzahl von Fasern, um eine Bahn auf einer bahnbildenden Fläche zu bilden, derart, dass ein Hauptteil der Fasern in der so gebildeten Bahn eine Faserrichtung aufweist, die einen Winkel im Wesentlichen parallel zur Maschinenrichtung der Bahn bildet; und
daraufhin Bondieren der Bahn in einem Bondiermuster umfassend eine Mehrzahl von Bondierstellen, wobei die Bondierstellen, die einer Achse entlang senkrecht zur Maschinenrichtung angeordnet sind, mehr als zweimal so weit voneinander beabstandet sind als die Bondierstellen, die einer Achse entlang parallel zur Maschinenrichtung angeordnet sind, wobei die Bondierstellen durch Wärmeenergie bereitgestellt werden.

4. Verfahren nach Anspruch 3, wobei die Mehrzahl der Fasern durch kardierte Wickel von Fasern bereitgestellt wird, die so aufeinander ausgerichtet sind, dass eine Mehrheit der abgelegten Fasern eine Faserrichtung aufweist, die einen Winkel im Wesentlichen parallel zur Maschinenrichtung der Bahn bildet.

5. Verfahren nach Anspruch 4, wobei Luftdüsen eingesetzt werden, um zu gewährleisten, dass eine Mehrheit der abgelegten Fasern eine Faserrichtung aufweist, die einen Winkel im Wesentlichen parallel zur Maschinenrichtung der Bahn bildet.

6. Dehnbarer Vliesstoff nach Anspruch 1, des Weiteren eine Lage harter Fasern umfassend.

7. Dehnbarer Vliesstoff nach Anspruch 6, wobei die harten Fasern spinnbondierte oder schmelzgeblasene harte Fasern sind.

8. Dehnbarer Vliesstoff nach Anspruch 7, wobei die harten Fasern aus einer Gruppe ausgewählt sind bestehend aus: Polypropylen, Polyethylen, Polyester und Polypropylen-Polyethylen-Mischungen.

## Revendications

1. Textile non-tissé extensible sous la forme d'un voile fibreux, ledit textile non-tissé ayant, tel que fabriqué et avant d'être restreinte ou consolidé, des propriétés physiques substantiellement différentes dans le sens de la machine par rapport au sens transversal, **caractérisé en ce que** ledit textile non-tissé a:
a) une pluralité de fibres déposées sur une surface formant voile de sorte qu'une majorité des fibres dans le voile résultant ont un sens des fibres faisant un angle substantiellement parallèle au sens de la machine du voile;
b) une pluralité de points de liaison à l'intérieur dudit voile en un motif de sorte que les points de liaison disposés le long d'un axe perpendiculaire au sens de la machine sont espacés de plus de deux fois l'éloignement des points de liaison disposés le long d'un axe parallèle au sens de la machine; et
c) un allongement dans le sens transversal de 100 à 200 pour cent.

2. Textile non-tissé extensible selon la revendication 1 sélectionné parmi le groupe comprenant: des structures filées liées, de fusion soufflage, cardées thermiquement liées, et lacées par filage.

3. Procédé de fabrication d'un textile non-tissé extensible selon la revendication 1, ledit procédé comprenant les étapes de:
dépôt d'une pluralité de fibres pour former un voile sur une surface formant voile d'une manière telle qu'une majorité des fibres dans le voile résultant ont un sens des fibres faisant un angle substantiellement parallèle au sens de la machine du voile; et
par la suite la liaison du voile en un motif de liaison comprenant une pluralité de points de liaison, les points de liaison étant disposés le long d'un axe perpendiculaire au sens de la machine étant espacés de plus de deux fois l'éloignement des points de liaison disposés le long d'un axe parallèle au sens de la machine, lesdits points de liaison étant fournis par énergie thermique.

4. Procédé selon la revendication 3, dans lequel la pluralité des fibres est fournie par des nappes cardées de fibres qui sont alignées de sorte qu'une majorité des fibres déposées aient un sens des fibres faisant un angle substantiellement parallèle au sens de la machine du voile.

5. Procédé selon la revendication 4, dans lequel des jets d'air sont utilisés pour conduire une majorité des fibres déposées à avoir un sens des fibres faisant un angle substantiellement parallèle au sens de la machine du voile.

6. Textile non-tissé extensible selon la revendication 1 comprenant en outre une couche de fibres dures.

7. Textile non-tissé extensible selon la revendication 6, dans lequel les fibres dures sont filées liées ou sont des fibres dures de fusion soufflage.

8. Textile non-tissé extensible selon la revendication 7, dans lequel les fibres dures sont sélectionnées parmi un groupe constitué du: polypropylène, polyéthylène, polyester et des mélanges de polypropylène-polyéthylène.
